# EUROPÄISCHE PATENTSCHRIFT

(11) **EP 0 516 059 B1**
(45) Veröffentlichungstag und Bekanntmachung des Hinweises auf die Patenterteilung: **17.08.1994**
(21) Anmeldenummer: 92108871.2
(22) Anmeldetag: 26.05.1992
(51) Int. Cl.: G08G 1/09, G09F 13/16

(54) **Verkehrswarnsystem**
Traffic warning system
Système d'avertissement pour trafic

(30) Priorität: 28.05.1991 DE 4117492
(43) Veröffentlichungstag der Anmeldung: 02.12.1992
(73) Patentinhaber: D. Swarovski & Co., A-6112 Wattens/Tirol (AT)
(72) Erfinder: Lanbach, Bruno, A-6060 Mils (AT)
(74) Vertreter: Kador & Partner

(56) Entgegenhaltungen:
- WO-A-86/00858
- WO-A-90/14647
- DE-A- 4 001 980
- DE-U- 8 712 096
- US-A- 4 929 942

## Beschreibung

Die Erfindung betrifft ein Verkehrswarnsystem nach dem Oberbegriff des Anspruchs 1.

Zum Absichern besonders gefährdeter Straßenabschnitte, wie z.B. Baustellen, Tunneleinfahrten, Engstellen etc. werden tragbare oder stationäre Verkehrswarnsysteme verwendet, die häufig zusätzlich zu den üblichen Verkehrsschildern angebracht werden und aufgrund ihrer erhöhten Signalwirkung die Verkehrsteilnehmer, insbesondere Kraftfahrer, bei schlechtem Wetter rechtzeitig über bevorstehende Gefahrenstellen unterrichten.

Aus der DE 40 01 980 A1 ist ein Markierungsnagel für Fahrbahnen bekannt. Die nach oben weisende Fläche des Nagelkopfes ist mit Solarzellen versehen und weist einen Helligkeitssensor auf sowie mindestens eine Leuchtdiode, wobei die die Leuchtdiode umgebende Fläche des Nagelkopfes mit einem reflektierenden Material beschichtet ist; im Nagelschaft ist ein Akkumulator vorgesehen, der über die Solarzelle bei Tageslichteinfall geladen wird und bei Dunkelheit mit dem in ihm gespeicherten elektrischen Strom die Leuchtdiode beaufschlagt.

Der Nagelkopf weist eine im wesentlichen flache Form auf mit einer nur wenig oberhalb der Fahrbahnfläche liegenden Oberfläche, so daß nur eine geringe Seitenfläche für die Anordnung von Leuchtdioden zur Verfügung steht, über die ein Kraftfahrer über größere Entfernungen gewarnt werden soll. Ferner muß damit gerechnet werden, daß an Tagen mit geringem Sonneneinfall aufgrund größerer Bewölkungsdichte nur eine geringe Strommenge im Akkumulator gespeichert wird, so daß schon nach relativ kurzer Zeit für die Beaufschlagung der Leuchtdioden kein Strom mehr zur Verfügung steht.

Aus FR 21 19 328 ist ein Warndreieck bekannt, dessen Schenkel als Reflektoren ausgebildet sind, vor denen blinkende Lichtquellen verteilt angeordnet sind. Die Schaltung, die die Lichtquellen entsprechend der Blinkfrequenz beaufschlagt, ist als astabiler Multivibrator mit zwei Transistoren ausgeführt. Bei einem rechnerisch ermittelten Taktverhältnis von 1:2 (50 %) und einer Betriebsspannung von 9 Volt für die Ansteuerung der beiden Transistoren ergibt sich ein mittlerer Dauerstrom von fast 6 mA und für den Betrieb mit den Leuchtguellen von mehr als 200 mA.

Der vorliegenden Erfindung liegt die Aufgabe zugrunde, ein Verkehrswarnsystem zu schaffen, das unabhängig von den Witterungsbedingungen die Verkehrsteilnehmer über eine große Entfernung über eine bevorstehende Gefahrenstelle informiert, das einen außerordentlich geringen Strombedarf aufweist und das billig in der Herstellung ist.

Dies wird erfindungsgemäß mit dem im Anspruch 1 gekennzeichneten Verkehrswarnsystem erreicht. In den Unteransprüchen sind vorteilhafte Ausgestaltungen der Erfindung wiedergegeben.

Das erfindungsgemäße Verkehrswarnsystem weist den Vorteil einer ungewöhnlich hohen Lichtintensität im Blinkbetrieb auf, wodurch Sichtreichweiten von über 1000 m erzielt werden bei gleichzeitg extrem geringem Strombedarf. Wie Versuche gezeigt haben, kann das erfindungsgemäße Verkehrswarnsystem mit einem mittleren Gesamtstrombedarf von weniger als 4 mA betrieben werden. Damit ist bei der Batterieversion eine Betriebsdauer im Tag/Nacht-Wechselbetrieb ohne Batteriewechsel von drei Jahren möglich.

Dieser extrem geringe Strombedarf wird im wesentlichen durch die sehr kurzen Stromimpulse von weniger als 100 ms, vorzugsweise weniger als 50 ms erreicht, mit denen erfindungsgemäß die Lichtquellen beaufschlagt werden.

Dabei wird erfindungsgemäß ein physiologischer Effekt genutzt. Bei unmittelbarer Belichtung verengt sich die Pupille des Auges. Wie Messungen ergeben haben, ist die Reaktionszeit der Pupille sehr kurz, das heißt eine Verengung der Pupille tritt beim Menschen normalerweise bereits nach einer Belichtungsdauer von 30 ms ein. Wenn sich die Pupille verengt, fällt weniger Licht auf die Netzhaut. Das heißt, die Netzhaut wird zunächst ca. 30 ms maximal erregt, worauf der Lichteinfall durch die sich verengende Pupille und damit die Netzhauterregung abnimmt. Mit anderen Worten, ein Lichtimpuls hat für das Auge nur für eine Dauer von ca. 30 ms die größte Auffälligkeit, dann nimmt seine Auffälligkeit bereits ab.

Die Oberfläche, an der der wenigstens eine Reflektor des erfindungsgemäßen Verkehrswarnsystems angeordnet ist, wird vorzugsweise durch die Oberfläche eines Gehäuses gebildet. Die Lichtquellen des erfindungsgemäßen Verkehrswarnsystems sind vorzugsweise über die gesamte mit dem Reflektor versehene Oberfläche verteilt. Dabei weisen sie eine derart hohe Lichtstärke auf, daß ein Überstrahlen des Reflektors erreicht wird.

Vorzugsweise sind die Lichtquellen Leuchtdioden, die eine Lichtstärke von mehr als 500 mcd, vorzugsweise mehr als 1400 mcd aufweisen. Die Stromstärke beträgt während der Impulspausen im Blinkbetrieb weniger als 500 µA, vorzugsweise weniger als 100 µA. Während des Zeiraums, in dem die Umfeldleuchtdichte oberhalb des vorgegebenen Schwellwerts liegt, wird die Stromstärke auf einen Wert kleiner als 100 µA, vorzugsweise kleiner 11 µA begrenzt.

Als Stromquelle kommt eine Trockenbatterie oder eine Solarzelle in Frage, der ein Akkumulator nachgeschaltet ist.

Die elektronische Schaltung umfaßt vorteilhafterweise einen Taktgenerator, der aus einem NAND-Schmitt-Trigger mit R/C-Schaltglied besteht, wobei einer der Eingänge des Schmitt-Triggers durch den Sensor ansteuerbar ist. Der erste Schmitt-Trigger ist mit einem zweiten Schmitt-Trigger verbunden, welcher das vom Taktgenerator gelieferte Signal in der extrem kurzen Impulsdauer von vorzugsweise weniger als 50 ms umwandelt. Ein Leistungsteil verstärkt das umgewandelte Signal. Seine Stromstärke ist auf einen vorgegebenen Wert von vorzugsweise höchstens 200 mA begrenzt.

Im Falle eines Verkehrswarnsystems mit einer Trockenbatterie besteht der Sensor vorteilhafterweise aus einem Phototransistor, der mit einem Widerstand verbunden ist, dessen Spannungsabfall den Taktgenerator ansteuert; im Falle eines Verkehrswarnsystems mit einer Solarzelle als Stromquelle dient diese vorteilhafterweise zugleich als Sensor.

Durch die Verwendung der sehr hellen Leuchtdioden mit einer Leuchtstärke von vorzugsweise mehr als 1400 mcd und deren großflächige Anordnung über die dem sich nähernden Verkehrsteilnehmer zugewandte Oberfläche mit dem Reflektor wird ein Überstrahlen des Reflektors erreicht, so daß auch bei einem kurzen Betrachtungsabstand das für das menschliche Auge wesentlich auffälligere Blinklicht voll zur Geltung kommt.

Im folgenden wird die Erfindung anhand der Zeichnung näher erläutert, in der ein vorteilhaftes Ausführungsbeispiel dargestellt ist. Es zeigen:
- Fig. 1: eine perspektivische Ansicht eines erfindungsgemäßen Verkehrswarnsystems;
- Fig. 2: eine Seitenansicht dieses Systems und
- Fig. 3: ein Blockschaltbild.

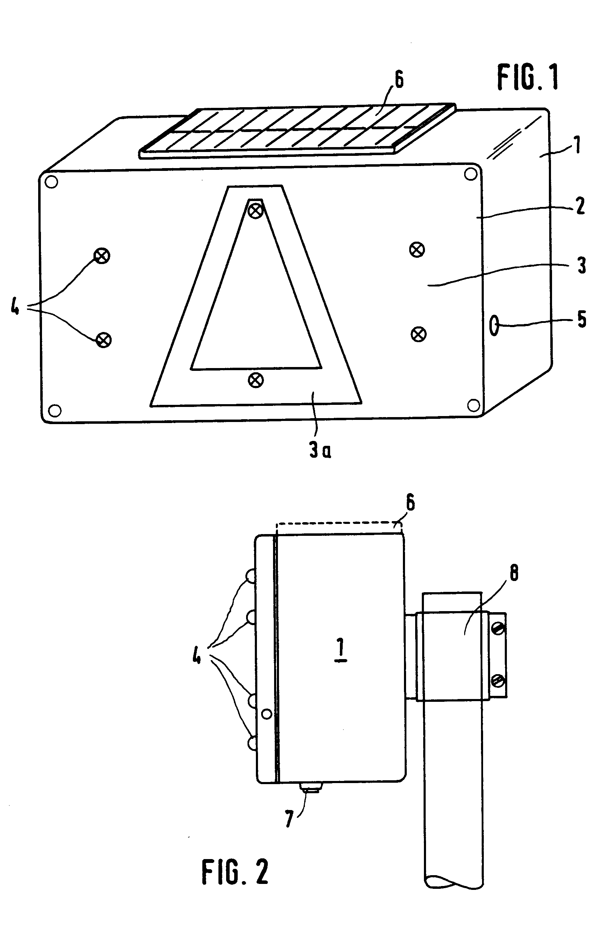

In Fig. 1 ist mit 1 das Gehäuse eines erfindungsgemäßen Verkehrswarnsystems bezeichnet, das als tragbares System ausgestaltet ist, jedoch auch mit einer in Fig. 2 dargestellten Halterung 8 stationär an einem Pfosten befestigt werden kann.

Auf der dem sich nähernden Verkehrsteilnehmer zugewandten Oberfläche 2 des Gehäuses 1 ist ein Reflektor befestigt, der den größten Teil der Oberfläche bedeckt und z.B. aus einer Reflektorfolie 3 einer ersten Farbe, z.B. weiß besteht, sowie aus einer zweiten Reflektorfolie 3a, einer anderen Farbe, z.B. rot. Tagsüber und insbesondere bei Sonnenschein ist dieses Verkehrswarnsystem, das vorteilhafterweise in einer gewissen Höhe über dem Boden angeordnet wird, bereits von weitem für sich nähernde Verkehrsteilnehmer sichtbar.

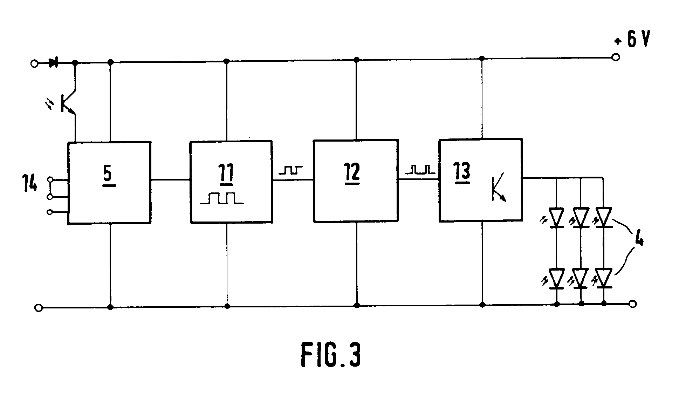

Um auch bei Dunkelheit die gleiche Warnfunktion auszuüben, sind auf der Oberfläche 2 des Gehäuses 1 eine Vielzahl von Leuchtdioden 4 großflächig verteilt, z.B. sechs Leuchtdioden, die in der in Fig. 1 gezeigten Weise angeordnet sein können. Als Leuchtdioden werden solche mit einer Lichtstärke von mehr als 1400 mcd und vorteilhafterweise von 1500 mcd verwendet, da diese in der Lage sind, bei ihrer großflächigen Anordnung gemäß Fig. 1 ein Überstrahlen der auf der Oberfläche 2 des Gehäuses 1 montierten weißen und roten Reflektorfolien 3, 3a zu ermöglichen. Im Inneren des Gehäuses 1 ist eine elektronische Schaltung zur Stromversorgung der Leuchtdioden 4 vorgesehen, deren Blockschaltbild in Fig. 3 schematisch dargestellt ist.

Diese Schaltung ist derart ausgelegt, daß sie während des Betriebes sehr wenig Strom aufnimmt, also eine sehr lange Betriebsdauer im Falle eines Verkehrswarnsystems mit Batterie ermöglicht bzw. bei Betrieb mit einer Solarzelle mit einer relativ einfachen Solarzelle auskommt. Zu diesem Zweck weist die elektronische Schaltung einen Taktgenerator 11 mit einer Taktzeit von 0,5 bis 2 s auf, der als NAND-Schmitt-Trigger mit einem R/C-Schaltglied ausgestaltet ist, wobei der eine Eingang des Schmitt-Triggers durch einen Helligkeitssensor 5 angesteuert wird, der bei Tageshelligkeit den Taktgenerator 11 sperrt. Dem Taktgenerator 11, der ein Rechtecksignal liefert, ist eine Impulsformerstufe 12 nachgeschaltet, der das Signal des Taktgenerators 11 über ein zweites R/C-Glied zugeführt wird. Der Impulsformer 12 wird durch einen weiteren NAND-Schmitt-Trigger gebildet, wodurch die fallende Flanke des Rechteckimpulses des ersten Schmitt-Triggers in einen positiven Impuls von z.B. 30 ms umgewandelt wird.

Dieser umgewandelte 30 ms Impuls wird durch ein nachgeschaltetes Leistungsteil 13, z.B. eine NPN-Transistorstufe in Kollektorschaltung verstärkt und über einen in der Emitterleitung liegenden Widerstand auf eine niedrige Stromstärke von z.B. 100 mA begrenzt und dann den Leuchtdioden 4 zugeführt.

Zur Aktivierung der elektronischen Schaltung ist ein auf die Umfeldleuchtdichte reagierender Sensor 5 vorgesehen, der beim Batteriemodell aus einem Phototransistor besteht, der mit einem Widerstand zusammengeschaltet ist. Der Spannungsabfall am Widerstand steuert in diesem Fall einen Eingang des Taktgenerators an.

Sofern das Verkehrswarnsystem mit einer Solarzelle 6 (Fig. 1) versehen ist, kann diese Solarzelle 6 die Funktion des Sensors 5 übernehmen, indem ein NPN-Schalttransistor hochohmig angesteuert wird, welcher über einen ebenfalls hochohmigen Arbeitswiderstand einen Eingang des Taktgenerators 11 schaltet, wodurch eine Helligkeitserkennung möglich wird. Die Solarzelle mit einer Leerlaufspannung von ca. 9 Volt wird bei diesem Ausführungsbeispiel über eine Diode an die Akku-Versorgungsspannung angeschlossen. Direkt an der Solarzelle kann dann ein hochohmig angeschlossener Schalttransistor die Solarspannung überwachen und damit die Tag/Nachterkennung durchführen und die elektronische Schaltung aktivieren.

Mit der elektronischen Schaltung werden die Leuchtdioden 4 mit Lichtimpulsen einer Dauer von z.B. 20 bis 40 ms und vorzugsweise 30 bis 35 ms angesteuert, während zugleich eine Verringerung des Strombedarfs in den Impulspausen auf einen Wert kleiner als 100 µA, insbesondere 80 µA, und im Tagbetrieb auf einen Wert kleiner 20 µA, insbesondere 10 µA, ermöglicht wird. Es können ferner preisgünstige CMOS-Komponenten verwendet werden, die für eine Betriebstemperatur von -40°C bis +100°C ausgelegt sind. Damit wird der Schaltungsaufwand minimiert, der Strombedarf auf einen außerordentlich geringen Wert gesenkt und trotzdem eine erheblich höhere Sichtreichweite gegenüber herkömmlichen Verkehrswarnsystemen erzielt.

## Patentansprüche

1. Verkehrswarnsystem mit mindestens einem auf einer Oberfläche (2) befestigten Reflektor (3, 3a), mehreren Lichtquellen, einem auf die Umfeldleuchtdichte reagierenden Sensor (5), einer Stromquelle und einer Schaltung zur Versorgung der Lichtquellen mit elektrischem Strom unterhalb eines vorgegebenen Schwellwerts der Umfeldleuchtdichte, dadurch gekennzeichnet, daß die Schaltung die Lichtquellen mit Stromimpulsen mit einer Impulsdauer von weniger als 100 ms beaufschlagt.

2. Verkehrswarnsystem nach Anspruch 1, dadurch gekennzeichnet, daß die Lichtquellen über die gesamte mit dem Reflektor (3, 3a) versehene Oberfläche (2) verteilt sind und eine derart hohe Leuchtstärke aufweisen, daß ein Überstrahlen des Reflektors (3, 3a) erreicht ist.

3. Verkehrswarnsystem nach Anspruch 1 oder 2, dadurch gekennzeichnet, daß die Lichtquellen durch Leuchtdioden (4) gebildet sind.

4. Verkehrswarnsystem nach Anspruch 3, dadurch gekennzeichnet, daß die Stromstärke während der Impulspausen auf weniger als 500 µA begrenzt ist.

5. Verkehrswarnsystem nach Anspruch 3, dadurch gekennzeichnet, daß die Leuchtdioden (4) eine Lichtstärke von mehr als 500 mcd aufweisen.

6. Verkehrswarnsystem nach einem der Ansprüche 3 bis 5, dadurch gekennzeichnet, daß die Reststromstärke während des Zeitraums, in dem die Umfeldleuchtdichte oberhalb des vorgegebenen Schwellwerts liegt, auf einen Wert kleiner als 50 µA begrenzt ist.

7. Verkehrswarnsystem nach einem der vorstehenden Ansprüche, dadurch gekennzeichnet, daß die Schaltung einen Taktgenerator (11) aufweist, der aus einem NAND-Schmitt-Trigger mit R/C-Schaltglied besteht, dessen einer Eingang durch den Sensor (5) ansteuerbar ist und der mit einem zweiten NAND-Schmitt-Trigger verbunden ist, welcher das vom Taktgenerator (11) gelieferte Signal in die Impulse mit einer Impulsdauer von weniger als 100 ms umwandelt.

8. Verkehrswarnsystem nach Anspruch 1, dadurch gekennzeichnet, daß die Stromquelle eine Trockenbatterie ist.

9. Verkehrswarnsystem nach Anspruch 8, dadurch gekennzeichnet, daß der Sensor (5) ein mit einem Widerstand verbundener Phototransistor ist, wobei der Spannungsabfall am Widerstand den Taktgenerator (11) ansteuert.

10. Verkehrswarnsystem nach Anspruch 1, dadurch gekennzeichnet, daß die Stromquelle ein Akku mit vorgeschalteter Solarzelle (6) ist.

11. Verkehrswarnsystem nach Anspruch 10, dadurch gekennzeichnet, daß die Solarzelle (6) zugleich der Sensor ist.

## Claims

1. A traffic warning system having at least one reflector (3, 3a) fastened to a surface (2), a plurality of light sources, a sensor (5) reacting to the surroundings luminance, a power source and a circuit for supplying the light sources with electric current below a given threshold of surroundings luminance, **characterized** in that the circuit acts on the light sources with current pulses having a pulse duration of less than 100 milliseconds.

2. The traffic warning system of claim 1, **characterized** in that the light sources are distributed over the total surface (2) provided with the reflector (3, 3a) and have such high luminosity that the reflector (3, 3a) is irradiated.

3. The traffic warning system of claim 1 or 2, **characterized** in that the light sources are formed by light-emitting diodes (4).

4. The traffic warning system of claim 3, **characterized** in that the current intensity is limited during the interpulse periods to less than 500 microamperes.

5. The traffic warning system of claim 3, **characterized** in that the light-emitting diodes (4) have a luminous intensity of more than 500 millicandelas.

6. The traffic warning system of any of claims 3 to 5, **characterized** in that the residual current intensity is limited to a value smaller than 50 microamperes during the period in which the surroundings luminance is above the given threshold.

7. The traffic warning system of any of the above claims, **characterized** in that the circuit has a clock generator (11) comprising a NAND Schmitt-trigger with R/C gate one input of which is driven by the sensor (5) and which is connected with a second NAND Schmitt-trigger which converts the signal provided by the clock generator (11) into the pulses having a pulse duration of less than 100 milliseconds.

8. The traffic warning system of claim 1, **characterized** in that the power source is a dry battery.

9. The traffic warning system of claim 8, **characterized** in that the sensor (5) is a phototransistor connected with a resistor, the voltage drop at the resistor driving the clock generator (11).

10. The traffic warning system of claim 1, **characterized** in that the power source is an accumulator with a preceding solar cell (6).

11. The traffic warning system of claim 10, **characterized** in that the solar cell (6) is at the same time the sensor.

## Revendications

1. Système d'avertissement de trafic comportant au moins un réflecteur (3, 3a) fixé sur une surface, plusieurs sources de lumière, un capteur (5) qui réagit à la densité de la lumière ambiante, une source de courant et un circuit pour alimenter les sources de lumière avec un courant électrique, au-dessous d'une valeur de seuil prédéterminée de la densité de lumière ambiante, caractérisé en ce que le circuit applique aux sources de lumière des impulsions de courant possédant une durée inférieure à 100 ms.

2. Système d'avertissement de trafic selon la revendication 1, caractérisé en ce que les sources de lumière sont réparties sur toute la surface (2) équipée du réflecteur (3, 3a) et possèdent une intensité lumineuse si élevée qu'on obtient une irradiation complète du réflecteur (3, 3a).

3. Système d'avertissement de trafic selon la revendication 1 ou 2, caractérisé en ce que les sources de lumière sont formées par des diodes à luminescence (4).

4. Système d'avertissement de trafic selon la revendication 3, caractérisé en ce que l'intensité du courant pendant les pauses entre les impulsions est limitée à moins de 500 µA.

5. Système d'avertissement de trafic selon la revendication 3, caractérisé en ce que les diodes à luminescence (4) possèdent une intensité lumineuse supérieure à 500 mcd.

6. Système d'avertissement de trafic selon l'une des revendications 3 à 5, caractérisé en ce que l'intensité de courant résiduelle pendant l'intervalle de temps, pendant lequel la densité de la lumière ambiante est supérieure à la valeur de seuil prédéterminée, est limitée à une valeur inférieure à 50 µA.

7. Système d'avertissement de trafic selon l'une des revendications précédentes, caractérisé en ce que le circuit comporte un générateur de cadence (11), qui est constitué par un déclencheur de Schmitt NON-ET comportant un circuit de commutation R/C, dont une entrée peut être commandée par le capteur (5) et qui est raccordé à un second déclencheur de Schmitt NON-ET, qui convertit le signal délivré par le générateur de cadence (11) en impulsions ayant une durée inférieure à 100 ms.

8. Système d'avertissement de trafic selon la revendication 1, caractérisé en ce que la source de courant est une pile sèche.

9. Système d'avertissement de trafic selon la revendication 8, caractérisé en ce que le capteur (5) est un phototransistor, qui est relié à une résistance, la chute de tension aux bornes de la résistance commandant le générateur de cadence (11).

10. Système d'avertissement de trafic selon la revendication 1, caractérisé en ce que la source de courant est un accumulateur en amont duquel est branchée une pile solaire (6).

11. Système d'avertissement de trafic selon la revendication 10, caractérisé en ce que la pile solaire (6) constitue simultanément le capteur.
